# FASCICULE DE BREVET EUROPEEN

(11) **EP 2 831 936 B1**
(45) Date de publication et mention de la délivrance du brevet: **10.05.2017**
(21) Numéro de dépôt: 13719927.9
(22) Date de dépôt: 26.03.2013
(51) Int. Cl.: H01M 2/12, H01M 2/10, H01M 10/52, H01M 10/052

(54) **CONTENEUR DE BATTERIE COMPRENANT UN MOYEN DE NEUTRALISATION DES VAPEURS D' ACIDE FLUORHYDRIQUE**
BATTERIEBEHÄLTER MIT EINER VORRICHTUNG ZUR NEUTRALISIERUNG VON FLUORWASSERSTOFFSÄUREDÄMPFEN
BATTERY CONTAINER COMPRISING A MEANS FOR NEUTRALISING HYDROFLUORIC ACID VAPOURS

(30) Priorité: 29.03.2012 FR 1252821
(43) Date de publication de la demande: 04.02.2015
(73) Titulaire: Renault S.A.S., 92100 Boulogne-Billancourt (FR)
(72) Inventeur: DELOBEL, Bruno, F-75015 Paris (FR); ORIGUCHI, Masato, F-78120 Rambouillet (FR)
(86) Numéro de dépôt international: PCT/FR2013/050643
(87) Numéro de publication internationale: WO 2013/144495

(56) Documents cités:
- DE-A1- 10 157 272
- DE-A1-102008 025 422
- US-A1- 2012 070 703

## Description

L'invention concerne un conteneur de batterie destiné à un véhicule électrique.

Un véhicule électrique comprend une batterie de puissance. La batterie comporte au moins un accumulateur d'énergie électrique et un conteneur renfermant l'accumulateur d'énergie électrique. L'accumulateur est un dispositif électrochimique de stockage de l'électricité. Par exemple, une batterie peut comporter six accumulateurs d'énergie électrique identiques. Les accumulateurs sont reliés électriquement en séries entre eux au moyen de barrettes conductrices.

Les accumulateurs d'énergie électrique sont pour la plupart fabriqués à base d'hexafluorophosphate de Lithium (LiPF₆). En cas d'incendie accidentel, ce qui est très improbable compte tenu des multiples dispositifs de sécurité mis en oeuvre par la demanderesse, la combustion de la batterie entraine la décomposition du sel d'hexafluorophosphate de Lithium contenu dans les accumulateurs d'énergie électrique, produisant un dégagement d'acide fluorhydrique (HF). En effet, l'hexafluorophosphate de Lithium se décompose de la manière suivante :

LiPF₆ + H₂O → LiF + H₃PO₄ + 5HF

Les vapeurs d'acide fluorhydrique sont nocives pour l'homme et pour l'environnement.

La demande DE 101 57 272 divulgue un conteneur de batterie comportant des moyens de sorption de telles vapeurs.

Dans un but de précaution, l'invention vise ainsi à réduire les émissions d'acide fluorhydrique lors d'une improbable combustion accidentelle de la batterie et plus particulièrement des accumulateurs d'énergie électrique.

L'invention concerne un conteneur de batterie comprenant une enveloppe externe entourant un logement destiné à recevoir au moins un accumulateur d'énergie électrique comportant de l'hexafluorophosphate de Lithium (LiPF₆). Le conteneur comporte un filtre comprenant un matériau à base d'oxyde de silicium (SiO₂) apte à filtrer des vapeurs d'acide fluorhydrique (HF), celles-ci pouvant par exemple être émises lors de la combustion accidentelle des accumulateurs d'énergie électrique.

Selon l'invention, le filtre inclut une enveloppe interne disposée entre l'enveloppe externe et le logement du conteneur, l'enveloppe externe comprenant une face interne contre laquelle est fixée l'enveloppe interne, l'enveloppe interne entoure complètement le logement.

L'oxyde de silicium (SiO₂) est également appelé silice.

On entend par un matériau à base d'oxyde de silicium un matériau comprenant de la silice existant à l'état libre sous différentes formes cristallines ou amorphes ou à l'état combiné dans les silicates, les groupes SiO₂ étant alors liés à d'autres atomes (Aluminium, Fer, Magnésium, Calcium, Sodium, Potassium, par exemple...).

Les silicates (ou matériaux silicatés) sont des sels dérivant de la silice. Le silicate utilisé peut être un tectosilicate ou un phyllosilicate par exemple.

Ainsi, l'invention permet de réduire les émissions de vapeurs d'acide fluorhydrique émises lors de la combustion accidentelle d'une batterie ou plus précisément des accumulateurs d'énergie électrique à base de sel d'hexafluorophosphate de Lithium.

Les vapeurs d'acide fluorhydrique réagissent chimiquement avec le filtre avant qu'elles ne soient relâchées dans l'atmosphère. Le filtre forme un piège à vapeurs d'acide fluorhydrique.

Des tests montrent qu'un flux d'air avec une concentration initiale de 50ppm d'acide fluorhydrique présente une concentration en HF diminuée de moitié lorsque ce flux est filtré par de la laine de verre.

L'origine de la diminution de la concentration en HF après filtration par le filtre s'explique en partie par l'adsorption de l'acide fluorhydrique à la surface du filtre (l'acide fluorhydrique et les matériaux silicatés (ou la silice) sont affins) et/ou par une réaction chimique de l'acide fluorhydrique avec le dioxyde de silicium (SiO₂), appelée silice, selon la réaction suivante :

SiO₂ + 6HF → H₂SiF₆ + 2H₂O

Cette réaction se décompose de la façon suivante:

SiO₂ + 4HF → SiF₄ + 2H₂O (1^{ère} étape)

3SiF₄ + 2H₂O → 2H₂SiF₆ + SiO₂ (2^{ème} étape)

Le dioxyde de silicium se comporte alors comme un catalyseur puisqu'on le retrouve à la fin de la réaction.

Dans différents modes de réalisation possibles, le dispositif de l'invention peut être défini également par les caractéristiques suivantes qui pourront être considérées isolément ou selon toutes leurs combinaisons techniquement possibles et qui apportent chacune des avantages spécifique :
La surface spécifique du matériau filtrant est d'au moins 1m²/g. Lorsque le matériau filtrant est sous forme de mousse par exemple, ce dernier filtre davantage les vapeurs d'acide fluorhydrique lorsque sa surface spécifique est importante de l'ordre de 50 à 400m²/g par exemple. La surface réagissant avec les vapeurs d'acide fluorhydrique est ainsi plus importante.

Le matériau filtrant comprend du gluconate de calcium ou du sulfate de calcium. Lorsqu'une mousse de verre est imprégnée avec un sel actif vis-à-vis de l'acide fluorhydrique, le pouvoir filtrant du matériau filtrant augmente. La face interne de l'enveloppe externe est entièrement recouverte par l'enveloppe interne du filtre, qui peut en outre être au moins partiellement formé par un matériau fibreux, notamment de la laine de verre incluant l'oxyde de silicium.

Dans ce mode de réalisation, le filtre présente deux fonctions car il peut également être utilisé comme isolant thermique dans le pack batterie. La laine de verre, par exemple, sert d'isolant thermique et de filtre à vapeurs d'acide fluorhydrique en cas de combustion de la batterie.

Selon un autre mode de réalisation possible, le conteneur de batterie comprend au moins un dispositif d'évacuation des fumées muni d'un orifice permettant une communication fluidique entre l'intérieur et l'extérieur du conteneur.

Selon un autre mode de réalisation possible, le dispositif d'évacuation des fumées comprend au moins une grille métallique disposée à l'intérieur de l'orifice pour supporter le filtre.

Une soupape peut être associée à l'orifice (ou chaque orifice) permettant l'ouverture et/ou la fermeture de ce dernier.

L'invention sera mieux décrite par la figure ci-dessous :
- La figure 1 représente schématiquement une batterie comprenant un filtre formé par une enveloppe interne recouvrant l'enveloppe externe du conteneur, selon un premier mode de réalisation de l'invention ;
- La figure 2 représente schématiquement une batterie comprenant deux dispositifs d'évacuation de fumées chacun muni d'un filtre, selon un deuxième mode de réalisation de l'invention ;

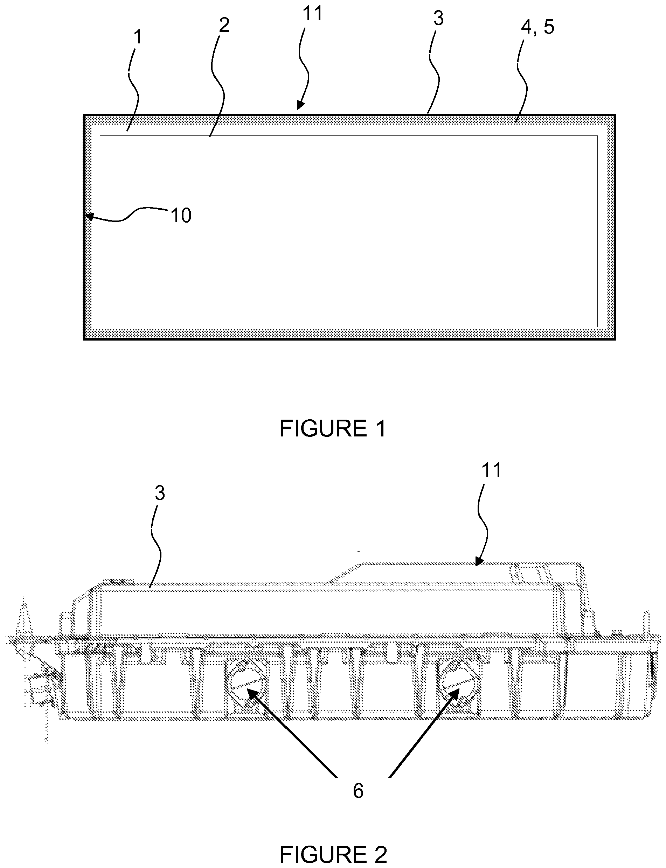

- La figure 1 représente schématiquement une batterie comprenant un conteneur de batterie 11 comportant une enveloppe externe 3 entourant un logement 1 destiné à recevoir au moins un accumulateur d'énergie électrique 2 comportant de l'hexafluorophosphate de Lithium (LiPF₆). Le conteneur de batterie 11 peut être en polymère ou en métal et sert à protéger les accumulateurs d'énergie électrique 2 contre les chocs externes.

Le conteneur de batterie 11 comprend un filtre 4 comportant un matériau à base d'oxyde de silicium (SiO₂) (ou silice) filtrant des vapeurs d'acide fluorhydrique (HF) émises lors de la combustion accidentelle de la batterie 2.

On entend par un matériau à base d'oxyde de silicium un matériau formé avec de la silice existant à l'état libre sous différentes formes cristallines ou amorphes ou à l'état combiné dans les silicates, les groupes SiO₂ étant alors liés à d'autres atomes (Aluminium, Fer, Magnésium, Calcium, Sodium, Potassium, par exemple...).

Les silicates (ou matériaux silicatés) sont des sels dérivant de la silice. Le silicate utilisé peut être un tectosilicate ou un phyllosilicate par exemple.

La surface spécifique du matériau filtrant est d'au moins 1m²/g. Lorsque le matériau filtrant est sous forme de mousse par exemple, ce dernier filtre d'avantage les vapeurs d'acide fluorhydrique lorsque sa surface spécifique est importante (50 - 400m²/g). La surface réagissant avec les vapeurs d'acide fluorhydrique est ainsi plus importante.

En variante, le matériau filtrant peut comprendre du gluconate de calcium ou du sulfate de calcium. L'avantage de ces deux sels de calcium est leur réactivité avec le fluor : Ca⁺² réagit avec 2F⁻ pour donner CaF₂ Lorsqu'une mousse de verre est imprégnée avec un sel actif vis-à-vis de l'acide fluorhydrique, le pouvoir filtrant du matériau filtrant augmente.

Le matériau filtrant peut être sous différentes formes comme de la laine de verre, une mousse, ou des fibres avec une composition chimique générique a (SiO₂)-b(MgO)-c(CaO)-d (Al₂O₃)-e(ZrO₂)-f(Na₂CO₃) avec a, b, c, d, e, f les fractions des différents composants du verre telles que a+b+c+d+e+f=1, 0<a<1, 0<b<0.5, 0<c<0.5, 0<d<1 et 0<e<0.2.

Selon un premier mode de réalisation représenté sur la figure 1, le filtre 4 inclut une enveloppe interne 5 disposée à l'intérieur du conteneur et plus précisément entre l'enveloppe externe 3 et le logement 1 du conteneur.

Son épaisseur est d'au moins 1 mm.

De préférence, l'enveloppe externe 3 comprend une face interne 10 contre laquelle est fixée l'enveloppe interne 5. L'enveloppe interne 5 peut recouvrir entièrement l'enveloppe externe 3. L'enveloppe interne 5 entoure complètement le logement 1.

Dans ce cas, le filtre 4 présente deux fonctions car il peut également être utilisé comme isolant thermique dans le pack batterie. Si le filtre 4 est en laine de verre, par exemple, il sert d'isolant thermique et à filtrer les vapeurs d'acide fluorhydrique en cas de combustion accidentelle du pack batterie.

Entre l'enveloppe externe 3 et l'enveloppe interne 5 formée par le filtre 4, il peut être prévu d'autres couches ou enveloppes.

Lorsque les accumulateurs d'énergie électrique 2 sont en combustion, une partie des vapeurs d'acide fluorhydrique sont piégées par le filtre 4.

Le fait que le filtre 4 entoure les accumulateurs d'énergie électrique 2 lui permet de s'étendre sur une grande surface et de piéger une grande quantité de vapeurs d'acide fluorhydrique.

Selon un deuxième mode de réalisation possible représenté sur la figure 2, le conteneur de batterie 11 comprend au moins un dispositif d'évacuation des fumées 6 muni d'un orifice 7 permettant une communication fluidique entre l'intérieur et l'extérieur du conteneur, et recevant le filtre 4. Comme illustré sur la figure 2, le conteneur de batterie 11 comprend deux dispositifs d'évacuation des fumées 6.

Le dispositif d'évacuation des fumées 6 comprend une soupape 9 associée à chaque orifice 7 permettant l'ouverture ou la fermeture de ce dernier. Le filtre 4 est disposé en amont de la soupape 9 par rapport au sens de circulation des vapeurs d'acide fluorhydrique, et plus précisément à l'entrée de l'orifice 7. La soupape 9 est disposée en sortie de l'orifice 7. Elle s'ouvre lorsque la pression des gaz à l'intérieur du conteneur est supérieure à la pression atmosphérique, permettant d'évacuer des fumées en cas de combustion accidentelle de l'accumulateur.

Sur la figure 2, les dispositifs d'évacuation des fumées 6 sont positionnés sur les parois latérales du conteneur. Ils peuvent être disposés différemment comme sur la paroi supérieure du conteneur. Le diamètre des orifices est d'au moins 4 cm.

## Revendications

1. Conteneur de batterie (11) comprenant une enveloppe externe (3) entourant un logement (1) destiné à recevoir au moins un accumulateur d'énergie électrique (2) comportant de l'hexafluorophosphate de Lithium (LiPF₆), le conteneur comportant un filtre (4) comprenant un matériau à base d'oxyde de silicium (SiO₂) apte à filtrer des vapeurs d'acide fluorhydrique (HF), le conteneur étant **caractérisé en ce que**, le filtre incluant une enveloppe interne (5) disposée entre l'enveloppe externe (3) et le logement (1) du conteneur, l'enveloppe externe comprenant une face interne (10) contre laquelle est fixée l'enveloppe interne, l'enveloppe interne entoure complètement le logement.

2. Conteneur de batterie (11) selon la revendication 1, **caractérisé en ce que** la face interne (10) de l'enveloppe externe (3) est entièrement recouverte par l'enveloppe interne (5) du filtre.

3. Conteneur de batterie (11) selon la revendication 2, **caractérisé en ce que** le filtre (4) est au moins partiellement formé par un matériau fibreux, notamment de la laine de verre incluant l'oxyde de silicium.

4. Conteneur de batterie (11) selon la revendication 1, **caractérisé en ce qu'**il comprend au moins un dispositif d'évacuation des fumées (6) muni d'un orifice (7) permettant une communication fluidique entre l'intérieur et l'extérieur du conteneur

5. Conteneur de batterie (11) selon l'une quelconque des revendications 4 à 6, **caractérisé en ce qu'**une soupape (9) est prévue en sortie de l'orifice (7) pour ouvrir ou fermer ce dernier

6. Conteneur de batterie (11) selon l'une quelconque des revendications précédentes, **caractérisé en ce que** la surface spécifique du matériau filtrant est d'au moins 1m²/g

7. Conteneur de batterie (11) selon l'une quelconque des revendications précédentes, **caractérisé en ce que** le matériau filtrant comprend du gluconate de calcium ou du sulfate de calcium.

## Patentansprüche

1. Batteriebehälter (11), der eine Außenhülle (3) umfasst, die ein Gehäuse (1) zur Aufnahme mindestens eines Elektroenergiespeichers (2), der Lithiumhexafluorophosphat (LiPF₆) umfasst, umgibt, wobei der Behälter ein Filter (4) umfasst, das ein Material auf Basis von Siliciumoxid (SiO₂) umfasst, das Fluorwasserstoffsäure(HF)-Dämpfe abfiltern kann, wobei der Behälter **dadurch gekennzeichnet ist, dass** das Filter eine Innenhülle (5) umfasst, die zwischen der Außenhülle (3) und dem Gehäuse (1) des Behälters angeordnet ist, wobei die Außenhülle eine Innenfläche (10) umfasst, an der die Innenhülle fixiert ist, wobei die Innenhülle das Gehäuse vollständig umgibt.

2. Batteriebehälter (11) nach Anspruch 1, **dadurch gekennzeichnet, dass** die Innenfläche (10) der Außenhülle (3) komplett von der Innenhülle (5) des Filters bedeckt ist.

3. Batteriebehälter (11) nach Anspruch 2, **dadurch gekennzeichnet, dass** das Filter (4) mindestens teilweise aus einem Fasermaterial, insbesondere Glaswolle, die Siliciumoxid umfasst, gebildet ist.

4. Batteriebehälter (11) nach Anspruch 1, **dadurch gekennzeichnet, dass** er mindestens eine Vorrichtung (6) zur Entlüftung von Dämpfen umfasst, die mit einer Öffnung (7) versehen ist, die eine Strömungsverbindung zwischen dem Inneren und dem Äußeren des Behälters gestattet.

5. Batteriebehälter (11) nach einem der Ansprüche 4-6, **dadurch gekennzeichnet, dass** ein Ventil (9) am Auslass der Öffnung (7) zum Öffnen oder Schließen dieser vorgesehen ist.

6. Batteriebehälter (11) nach einem der vorhergehenden Ansprüche, **dadurch gekennzeichnet, dass** die spezifische Fläche des Filtermaterials mindestens 1 m²/g beträgt.

7. Batteriebehälter (11) nach einem der vorhergehenden Ansprüche, **dadurch gekennzeichnet, dass** das Filtermaterial Calciumgluconat oder Calciumsulfat umfasst.

## Claims

1. Battery container (11) comprising an outer casing (3) surrounding a housing (1) intended to receive at least one electrical energy accumulator (2) comprising lithium hexafluorophosphate (LiPF₆), the container having a filter (4) comprising a material based on silicon oxide (SiO₂) capable of filtering hydrofluoric acid (HF) vapours, the container being **characterized in that**, the filter including an inner casing (5) positioned between the outer casing (3) and the housing (1) of the container, the outer casing comprising an inner face (10) against which the inner casing is attached, the inner casing completely surrounds the housing.

2. Battery container (11) according to Claim 1, **characterized in that** the inner face (10) of the outer casing (3) is entirely covered by the inner casing (5) of the filter.

3. Battery container (11) according to Claim 2, **characterized in that** the filter (4) is at least partially formed by a fibrous material, especially glass wool that includes silicon oxide.

4. Battery container (11) according to Claim 1, **characterized in that** it comprises at least one fume-discharging device (6) equipped with an orifice (7) that enables a fluidic communication between the inside and the outside of the container.

5. Battery container (11) according to any one of Claims 4 to 6, **characterized in that** a valve (9) is provided at the outlet of the orifice (7) in order to open or close the latter.

6. Battery container (11) according to any one of the preceding claims, **characterized in that** the specific surface area of the filter material is at least 1 m²/g_{.}

7. Battery container (11) according to any one of the preceding claims, **characterized in that** the filter material comprises calcium gluconate or calcium sulfate.
